# EUROPÄISCHE PATENTANMELDUNG

(11) **EP 4 378 972 A1**
(43) Veröffentlichungstag der Anmeldung: **05.06.2024**
(21) Anmeldenummer: 22210568.6
(22) Anmeldetag: 30.11.2022
(51) Int. Cl.: C08G 18/44, C08G 64/02

(54) **(CYCLO)ALIPHATISCHE POLYCARBONATPOLYOL-ZUSAMMENSETZUNG**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Die vorliegende Erfindung betrifft eine (Cyclo)aliphatische Polycarbonatpolyol-Zusammensetzung, erhältlich oder hergestellt durch Umsetzung von mindestens einem (cyclo)aliphatischen Polyol und mindestens einem Alkylcarbonat in Anwesenheit mindestens eines basischen Katalysators und anschließende Neutralisation des Katalysators mit mindestens einer starken Säure, die einen auf das korrespondierende Säure-Basen-Paar bezogenen pKs-Wert von 1 oder geringer hat, und mindestens einer mittelstarken Säure, die einen auf das korrespondierende Säure-Basen-Paar bezogenen pKs-Wert im Bereich von > 1 bis 7 hat.

## Beschreibung

Die vorliegende Erfindung betrifft eine (cyclo)aliphatische Polycarbonatpolyol-Zusammensetzung, ein Verfahren zu deren Herstellung und die Verwendung von bestimmten Neutralisationsmitteln als Stopper bei der Polycarbonatpolyol-Herstellung. Die Erfindung betrifft auch eine aus dem (cyclo)aliphatischen Polycarbonatpolyol erhältliche wässrige Polyurethandispersion, ein Zwei-Komponenten-System oder ein thermoplastisches Polyurethan sowie die aus diesen Gegenständen erhältlichen Beschichtungen oder Formkörper.

Oligo- oder Polycarbonatpolyole sind wichtige Vorprodukte, beispielsweise bei der Herstellung von Kunststoffen, Lacken und Klebstoffen. Sie werden z.B. mit Isocyanaten, Epoxiden, (cyclischen) Estern, Säuren oder Säureanhydriden umgesetzt (DE-A 1955902, EP-A 0 343 572). Sie können prinzipiell aus aliphatischen Polyolen durch Umsetzung mit Phosgen (z.B. DE-A 1 595 446, US-A 4533729), bis-Chlorkohlensäureestern (z.B. DE-A 857 948), Diarylcarbonaten (z.B. DE-A 1 915 908), cyclischen Carbonaten (z.B. DE-A 2 523 352, US-A 787632, DE-A 1495299) oder Dialkylcarbonaten (z.B. DE-A 2 555 805, EP-A 0 343 572, EP 0 533 275) hergestellt werden.

Die WO 2018/114827 A1 beschreibt ein Verfahren zur Herstellung von (cyclo)aliphatischen Polycarbonatpolyolen, bei dem organische Sulfonsäure mit einem Molekulargewicht von 250 bis 1000 g/mol und mindestens einer verzweigten oder unverzweigten Alkylsubstitution mit mindestens vier Kohlenstoffatomen als starkes Neutralisationsmittel des basischen Katalysators eingesetzt werden, um die Reaktivität des Polyols insbesondere gegenüber Isocyanatgruppen nicht zu steigern. In dem Dokument sind Vergleichsbeispiele zur Neutralisation des basischen Katalysators mit Dibutylphosphat enthalten, welches nicht zu einer ausreichenden Neutralisation führte.

Nachteilig am Verfahren der WO 2018/114827 A1 ist, dass die verwendete organische Sulfonsäure selbst eine katalytische Wirkung aufweist und es somit trotz erfolgreicher Neutralisation zu einer gesteigerten Reaktivität der (cyclo)aliphatischen Polycarbonatpolyole kommen kann.

Da es sich bei der Synthese von (cyclo)aliphatischen Polycarbonatpolyolen um Polymerisationsreaktionen ohne aufwendige Reinigungsschritte handelt, sind z.B. stetig schwankende Qualitäten der Einsatzstoffe und der Reaktionsführung zu bedenken und es ist nicht komplett vorhersehbar, wie sich die Reaktivität einzelner Chargen der (cyclo)aliphatischen Polycarbonatpolyole gegenüber weiteren Reaktionspartnern (wie beispielsweise Isocyanaten) verhalten wird.

Aufgabe der vorliegenden Erfindung war es daher, eine (cyclo)aliphatische Polycarbonatpolyol-Zusammensetzung bereitzustellen, die weder gefärbt noch getrübt ist und keine gesteigerte Reaktivität insbesondere gegenüber Isocyanaten aufweist. Eine weitere Aufgabe der vorliegenden Erfindung ist es, ein Verfahren zur Herstellung von (cylco)aliphatischen Polycarbonatpolyolen bereitzustellen, dass im Produkt weder zu Färbungen noch zu Trübungen führt und die Reaktivität des (cyclo)aliphatischen Polycarbonatpolyols insbesondere gegenüber Isocyanaten nicht steigert.

Diesem Bedarf Rechnung tragend ist ein Gegenstand der vorliegenden Erfindung eine (cyclo)aliphatische Polycarbonatpolyol-Zusammensetzung, erhältlich oder hergestellt durch Umsetzung von mindestens einem (cyclo)aliphatischen Polyol und mindestens einem Alkylcarbonat in Anwesenheit mindestens eines basischen Katalysators und anschließende Neutralisation des Katalysators mit mindestens einer starken Säure, die einen auf das korrespondierende Säure-Basen-Paar bezogenen pKs-Wert von 1 oder geringer hat, und mindestens einer mittelstarken Säure, die einen auf das korrespondierende Säure-Basen-Paar bezogenen pKs-Wert im Bereich von > 1 bis 7 hat.

Ebenfalls diesem Bedarf Rechnung tragend ist ein Gegenstand der vorliegenden Erfindung ein Verfahren zur Herstellung der erfindungsgemäßen (cyclo)aliphatische Polycarbonatpolyol-Zusammensetzung, umfassend die Schritte
a) Umsetzung von mindestens einem (cyclo)aliphatischen Polyol und mindestens einem Alkylcarbonat in Anwesenheit mindestens eines basischen Katalysators und
b) Neutralisation durch Zugabe mindestens einer starken Säure, die einen auf das korrespondierende Säure-Basen-Paar bezogenen pKs-Wert von 1 oder geringer hat, und mindestens einer mittelstarken Säure, die einen auf das korrespondierende Säure-Basen-Paar bezogenen pKs-Wert im Bereich von > 1 bis 7 hat,
wobei Schritt b) nach Schritt a) durchgeführt wird.

Überraschend ist besonders, dass der Zusatz von schwachen Säuren, wie beispielsweise Dibutylphosphat, die sehr reaktiven (cyclo)aliphatischen Polycarbonatpolyole weniger reaktiv macht, die weniger - aber immer noch ausreichend reaktiven (cyclo)aliphatischen Polycarbonatpolyole aber kaum in ihrer Reaktivität beeinflusst (also weder beschleunigt noch reaktionsträger macht). Besonders deutlich wird dies an den Beispielen, in denen exemplarisch 100 ppm Dibutylphosphat verwendet wurden.

Vorliegend ist der pKs-Wert für diese Erfindung definiert unter Normalbedingungen von 25°C. Als Referenz gilt Oxonium (auch Oxidanium, Hydroxonium oder Hydronium) bzw. protoniertes Wasser (H₃O⁺). Der pKs-Wert des Oxoniumions beträgt -1,74.

Vorliegend zählt bei mehrbasigen Säuren der niedrigste Wert als pKS-Wert, beispielsweise bei Phosphorsäure ist es der pKs1 von 2,16 und nicht die weiteren Werte pKs2 = 7,20 und pKs3 = 12,33.

Erfindungsgemäß bedeuten die Ausdrücke "umfassend", "enthaltend" usw. bevorzugt "im Wesentlichen bestehend aus" und besonders bevorzugt "bestehend aus". Die in den Patentansprüchen und in der Beschreibung genannten weiteren Ausführungsformen können beliebig kombiniert werden, sofern sich aus dem Kontext nicht eindeutig das Gegenteil ergibt.

"Mindestens ein", wie hierin verwendet, bezieht sich auf 1 oder mehr, beispielsweise 2, 3, 4, 5, 6, 7, 8, 9 oder mehr. Im Zusammenhang mit Bestandteilen der hierin beschriebenen Verbindungen bezieht sich diese Angabe nicht auf die absolute Menge an Molekülen, sondern auf die Art des Bestandteils. "Mindestens ein (cyclo)aliphatisches Polyol" bedeutet daher beispielsweise, dass nur eine Art von (cyclo)aliphatischem Polyol oder mehrere verschiedene Arten von (cyclo)aliphatischen Polyolen, ohne Angaben über die Menge der einzelnen Verbindungen zu machen, enthalten sein können.

Zahlenwerte, die hierin ohne Dezimalstellen angegeben sind, beziehen sich jeweils auf den vollen angegebenen Wert mit einer Dezimalstelle. So steht beispielsweise "99 %" für "99,0 %".

Numerische Bereiche, die in dem Format "in/von x bis y" angegeben sind, schließen die genannten Werte ein. Wenn mehrere bevorzugte numerische Bereiche in diesem Format angegeben sind, ist es selbstverständlich, dass alle Bereiche, die durch die Kombination der verschiedenen Endpunkte entstehen, ebenfalls erfasst werden.

Die Neutralisation in Schritt b) wird im Rahmen der vorliegenden Erfindung auch als Abstoppen bezeichnet, daher werden die starken Säuren und die mittelstarken Säuren folgend gemeinsam oder einzeln auch als Stopper bezeichnet. Die erfindungsgemäße Kombination aus basischen Katalysatoren und starken und mittelstarken Säuren wird im Rahmen der vorliegenden Erfindung auch als Katalysatorsystem bezeichnet.

Im Rahmen der vorliegenden Erfindung sind die Begriffe "anschließende Neutralisation" und "wobei Schritt b) nach Schritt a) durchgeführt wird" so zu verstehen, dass die Neutralisation durch die starke und mittelstarke Säure im Wesentlichen erst nach der Umsetzung von mindestens einem (cyclo)aliphatischen Polyol und mindestens einem Alkylcarbonat in Anwesenheit mindestens eines basischen Katalysators bzw. in Schritt b) im Wesentlichen erst nach der Umsetzung in Anwesenheit des basischen Katalysators in Schritt a) erfolgen kann. Der Begriff soll jedoch nicht bedeuten, dass Schritt b) zwingend unmittelbar nach Schritt a) durchgeführt wird. So können beliebige optionale Schritte, wie beispielsweise Reinigungsschritte, nach Schritt a) durchgeführt werden, an die sich dann der Schritt b) anschließt, wobei die Neutralisation des in Schritt a) erhaltenen Umsetzungsprodukts vorzugsweise zu 70 bis 110%, bevorzugt zu 90 bis 100%, besonders bevorzugt zu 95 bis 99% durch die starke Säure, sowie zu 1 bis 50%, bevorzugt zu 2 bis 30%, besonders bevorzugt zu 3 bis 20% durch die mittelstarke Säure (jeweils molar gesehen, bezogen auf die molare Menge an Base des basischen Katalysators aus a), bei mehrbasigen Säuren wird hier nur die Gruppe mit dem niedrigsten pKs gezählt.) erfolgt. Die molaren Mengen der Säure beziehen sich auf die ursprüngliche eingesetzte Menge des für Schritt a) eingesetzten basischen Katalysators (nicht auf die Menge nach einem ersten Teilneutralisationsschritt).

Bevorzugt ist, dass sich an die Umsetzung in Schritt a) ein weiterer Reaktionsschritt anschließt, der der Entfernung von endständigen Alkylcarbonatgruppen im Polymer dient. Dazu wird die Reaktionsmischung, bevorzugt unter verringertem Druck, einer erhöhten Temperatur von 150 bis 250°C, bevorzugt von 170 bis 220°C und besonders bevorzugt von 180 bis 210°C ausgesetzt und das entstehende Alkanol abdestilliert.

Vorliegend ist unter (cyclo)aliphatischen Polycarbonatpolyolen zu verstehen, dass cycloaliphatische Struktureinheiten und/oder verzweigte aliphatische Struktureinheiten und/oder unverzweigte aliphatische Struktureinheiten vorliegen. Bevorzugt liegen unverzweigte aliphatische Struktureinheiten vor.

Geeignete basische Katalysatoren sind beispielsweise Substanzen mit einem, auf das korrespondierende Säure-Basen-Paar bezogenen pKb-Wert unter 7, vorzugsweise unter 2 , ganz besonders bevorzugt unter 0. Konkrete Beispiele sind Natriumhydroxid, Kaliumhydroxid, Natriummethanolat, Kaliummethanolat, Natriumacetat, Kaliumacetat, Titantetraisopropylat, Titantetrabutylat, weitere Titanalkoholate, Ytterbiumacetylacetonat, andere Seltenerdacetylacetonate, Zinkacetylacetonat, Zinnacetylacetonat, Natriumacetylacetonat, Zinnoctoat, dessen technische Gemische, Aluminiumisopropylat, weitere Aluminiumalkoholate, aber auch starke aminische Basen wie beispielsweise 1,8-Diazabicyclo[5.4.0]undec-7-en (DBU) oder 1,5-Diazabicyclo[4.3.0]non-5-en (DBN).

In einer weiteren bevorzugten Ausführungsform ist der basische Katalysator ein basisches Salz aus der Reihe der Alkalimetalle. Unter der Reihe der Alkalimetalle werden Lithium, Natrium, Kalium, Rubidium und Cäsium, besonders bevorzugt Lithium, Natrium und Kalium, ganz besonders bevorzugt Natrium und Kalium und insbesondere ganz besonders bevorzugt Natrium verstanden.

Als Anionen geeigneter basischer Katalysatoren sind solche bevorzugt, die basisch sind oder unter Reaktionsbedingungen basische Eigenschaften hervorbringen können. Beispielsweise genannt seien: Hydroxide, Oxide, Carbonate, Hydrogencarbonate, Phosphate, Silikate, Alkoholate, wie z.B. Methanolate, Ethanolate, Propanolate. und Salze von organischen Säuren, wie z.B. Formiate, Acetate, Propionate. Dabei ist es auch denkbar, solche Salze *in situ* zu erzeugen, etwa indem das metallische Alkalimetall mit dem entsprechenden Alkohol oder der Säure umgesetzt wird.

Konkrete Beispiele für besonders bevorzugt geeignete basische Katalysatoren sind Natriumhydroxid, Kaliumhydroxid, Natriummethanolat, Kaliummethanolat, Natriumacetat, Kaliumacetat. Besonders bevorzugt sind Natriummethanolat oder Kaliummethanolat.

Es können erfindungsgemäß auch Mischungen von zwei und mehr basischen Katalysatoren verwendet werden.

Die erfindungsgemäß verwendeten basischen Katalysatoren können sowohl als Feststoff als auch in Lösung eingesetzt werden.

Die Konzentration der erfindungsgemäß verwendeten Katalysatoren und/oder der Mischungen liegt vorzugsweise zwischen 1 ppm bis 10000 ppm, bevorzugt zwischen 5 ppm und 500 ppm besonders bevorzugt zwischen 20 ppm und 150 ppm, jeweils bezogen auf das Gesamtgewicht der eingesetzten (cyclo)aliphatischen Polyole und Dialkylcarbonate.

Die Reaktionstemperatur der Umesterungsreaktion eines organischen Carbonats mit einem aliphatischen Polyol unter erfindungsgemäßer Verwendung der Katalysatoren zur Herstellung von aliphatischen Oligocarbonatenpolyolen mit einer Molmasse zwischen 500 und 5000 g/mol liegt vorzugsweise zwischen 40°C und 250°C, bevorzugt zwischen 60°C und 200°C und besonders bevorzugt zwischen 90°C und 170°C insbesondere zwischen 110°C und 160°C.

Als Alkylcarbonate können z.B. Dimethylcarbonat (DMC), Diethylcarbonat (DEC), Ethylencarbonat, Propylencarbonat eingesetzt werden. Bevorzugt werden die Dialkylcarbonate Dimethylcarbonat oder Diethylcarbonat eingesetzt. Ganz besonders bevorzugt wird Dimethylcarbonat verwendet.

Als Reaktionspartner der Umesterungsreaktion der organischen Carbonate zur Herstellung aliphatischer Oligocarbonatpolyole unter erfindungsgemäßer Verwendung der Katalysatoren können (cyclo)aliphatische Polyole mit 2 bis 25 C-Atomen (linear, cyclisch, verzweigt, unverzweigt, gesättigt oder ungesättigt) mit einer OH-Funktionalität ≥ 2 eingesetzt werden, wobei die OH-Funktionalität primär, sekundär oder tertiär und bevorzugt primär oder sekundär sein kann, wobei auch beliebige Gemische dieser OH-Funktionalitäten vorliegen können. Besonders bevorzugt sind die OH-Funktionalitäten primär.

Als Beispiele seien genannt: Ethylenglykol, 1,2 Propylenglykol, 1,3-Propylenglykol, 1,3-Butandiol, 1,4-Butandiol, 1,5-Pentandiol, 1,7-Heptandiol, 1,8-Ocantdiol, 1,9-Nonandiol, 1,10-Decandiol, 1,11-Undecandiol, 1,12-Dodecandiol, 3-Methyl-1,5-pentandiol, 1,6-Hexandiol, 2-Ethyl-hexandiol, 2-Methyl-1,3-propandiol, Cyclohexandimethanol, Dimerdiol, Diethylengykol, Dipropylenglykol, Tripropylenglykol, Dibutylenglykol, Trimethylolpropan, Pentaerythrit, hydriertes Bisphenol A, Tricyclodecyldimethanol.

Ebenso können Polyole erfindungsgemäß eingesetzt werden, die aus einer Ringöffnungsreaktion eines Lactons mit einem aliphatischen Alkohol (linear, cyclisch, verzweigt, unverzweigt, gesättigt oder ungesättigt) mit einer OH-Funktionalität ≥ 2 (primär, sekundär oder tertiär) hervorgegangen sind, wie z.B. das Addukt aus ε-Caprolacton und 1,6-Hexandiol oder ε-Caprolacton und Trimethylolpropan sowie deren Mischungen.

Es können auch kurzkettige Polyether eingesetzt werden, vorzugsweise Polyethylenglykole, Polypropylenglykole oder auch Polybutylenglykole. Solche kurzkettigen Polyether haben ein Molekulargewicht von nicht mehr als 800 g/mol, bevorzugt von weniger als 500 g/mol. Solche kurzkettigen Polyether sind vorzugsweise difunktionell.

Schließlich können auch Mischungen verschiedener oben erwähnter (cyclo)aliphatischer Polyole als Edukte eingesetzt werden.

Bevorzugt werden aliphatische oder cycloaliphatische, verzweigte oder unverzweigte, primäre oder sekundäre Polyole mit einer OH-Funktionalität ≥ 2. Besonders bevorzugt werden aliphatische, verzweigte oder unverzweigte, primäre Polyole mit einer Funktionalität ≥ 2. Ganz besonders bevorzugt ist der Einsatz von 1,6-Hexandiol und/oder 1,5-Pentandiol.

Die Umesterungsreaktion zwischen einem organischen Carbonat und einem aliphatischen Polyol unter erfindungsgemäßer Verwendung der Katalysatoren kann sowohl unter Atmosphärendruck als auch unter vermindertem oder erhöhtem Druck von 10⁻³ bis 10³ bar, bevorzugt von 1 bis 10 bar, durchgeführt werden.

Erfindungswesentlich ist der Zusatz eines Stoppers zu dem (cyclo)aliphatischen Polycarbonatpolyol, bevorzugt nach der Entfernung der endständigen Alkylcarbonatgruppen. Erfindungsgemäß wird als Stopper mindestens eine starken Säure, die einen auf das korrespondierende Säure-Basen-Paar bezogenen pKs-Wert von 1 oder geringer hat, und mindestens einer mittelstarken Säure, die einen auf das korrespondierende Säure-Basen-Paar bezogenen pKs-Wert im Bereich von > 1 bis 7 hat, verwendet.

In einer weiteren bevorzugten Ausführungsform weist die mindestens eine starke Säure einen, auf das korrespondierende Säure-Basen-Paar bezogenen pKs-Wert von -1 oder geringer und bevorzugt von -2 oder geringer auf.

In einer weiteren bevorzugten Ausführungsform ist die mindestens eine starke Säure eine organische Sulfonsäure, bevorzugt eine Alkyl- oder Arylsulfonsäure, besonders bevorzugt eine Arylsulfonsäure mit zumindest einem Alkysubstituent und ganz besonders bevorzugt eine organische Sulfonsäure mit einem Molekulargewicht von 250 bis 1000 g/mol, bevorzugt von 300 bis 500 g/mol, und mindestens einer verzweigten oder unverzweigten Alkylsubstitution mit mindestens vier Kohlenstoffatomen zugegeben. Bevorzugt weist die organische Sulfonsäure ein Molekulargewicht von 300 bis 500 g/mol und mindestens eine verzweigte oder unverzweigte Alkylsubstitution mit mindestens acht Kohlenstoffatomen auf. Beispiele für solche organischen Sulfonsäuren sind Tetrapropylenbenzolsulfonsäure oder Dodecylbenzolsulfonsäure bzw. deren Isomere. Bevorzugt ist, dass die organische Sulfonsäure Tetrapropylenbenzolsulfonsäure, Dodecylbenzolsulfonsäure und/oder ein technisches Isomerengemisch der Dodecylbenzolsulfonsäure ist. Besonders bevorzugt ist Dodecylbenzolsulfonsäure bzw. das technische Isomerengemisch derselben.

In einer weiteren bevorzugten Ausführungsform weist die mindestens eine mittelstarke Säure einen, auf das korrespondierende Säure-Basen-Paar bezogenen pKs-Wert von 2 bis 5 auf.

In einer weiteren bevorzugten Ausführungsform ist die mindestens eine mittelstarke Säure ein Hydrogenphosphat, bevorzugt Dibutylphosphat oder Phosphorsäure und besonders Dibutylphosphat.

Der Stopper aus starker und mittelstarker Säure dient der Neutralisation des basischen Katalysators und wird in einer weiteren bevorzugten Ausführungsform so eingesetzt, dass die Neutralisation des basischen Katalysators zu 70 bis 110%, bevorzugt zu 90 bis 100%, besonders bevorzugt zu 95 bis 99% durch die starke Säure, sowie zu 1 bis 50%, bevorzugt zu 2 bis 30%, besonders bevorzugt zu 3 bis 20% durch die mittelstarke Säure (jeweils molar gesehen, bezogen auf die molare Menge an Base, bei mehrbasigen Säuren wird hier nur die Gruppe mit dem niedrigsten pKs gezählt.) erfolgt.

Ein weiterer Gegenstand der Erfindung ist auch eine (cyclo)aliphatische Polycarbonatpolyol-Zusammensetzung, enthaltend mindestens ein (cyclo)aliphatisches Polycarbonatpolyol, 10 bis 200 Gew.-ppm Schwefel, bezogen auf das Gesamtgewicht der (cyclo)aliphatische Polycarbonatpolyol-Zusammensetzung, und 0,1 bis 10 Gew.-ppm Phosphor, bezogen auf das Gesamtgewicht der (cyclo)aliphatischen Polycarbonatpolyol-Zusammensetzung. Die Gehalte an Schwefel und Phosphor beziehen sich auf chemisch gebundene Anteile der Elemente und werden durch Elementaranalyse nach Mikrowellenaufschluss bestimmt.

Das erfindungsgemäße (cyclo)aliphatische Polycarbonatpolyol und/oder die erfindungsgemäße (cyclo)aliphatische Polycarbonatpolyol-Zusammensetzung hat ein zahlenmittleres Molekulargewicht (Mn) von 250 g/mol bis 5000 g/mol, bevorzugt von 500 g/mol bis 3000 g/mol und besonders bevorzugt von 800 g/mol bis 2500 g/mol. Das zahlenmittlere Molekulargewicht wird über die OH-Funktionalität in Kombination mit der OH-Zahl bestimmt.

Die OH-Funktionalität eines erfindungsgemäßen (cyclo)aliphatischen Polycarbonatpolyols und/oder die erfindungsgemäße (cyclo)aliphatische Polycarbonatpolyol-Zusammensetzung liegt zwischen 1,8 und 3,0; bevorzugt zwischen 1,9 und 2,5 und ganz besonders bevorzugt zwischen 1,94 und 2,00. Die OH-Funktionalität kann mittels ¹H-NMR-Spektroskopie bestimmt werden.

Ein weiterer Gegenstand der Erfindung ist auch die Verwendung mindestens einer starken Säure, die einen auf das korrespondierende Säure-Basen-Paar bezogenen pKs-Wert von 1 oder geringer hat, und mindestens einer mittelstarken Säure, die einen auf das korrespondierende Säure-Basen-Paar bezogenen pKs-Wert im Bereich von > 1 bis 7 hat, als Stopper bei der Herstellung von (cyclo)aliphatischen Polycarbonatpolyol-Zusammensetzungen zur Senkung der Reaktivität und/oder Erhöhung der Trübungsstabilität von Polycarbonatpolyolen.

Die erfindungsgemäßen (cyclo)aliphatischen Polycarbonatpolyole und/oder die erfindungsgemäße (cyclo)aliphatische Polycarbonatpolyol-Zusammensetzung eignen sich beispielsweise als Baustein zur Herstellung von wässrigen Polyurethandispersionen. Diese Polyurethandispersionen finden z.B. Einsatz als Lackrohstoff für Lackbeschichtungen, bei denen es besonders auf die Kombination von Hydrolyse-, Chemikalienbeständigkeit und hoher Elastizität sowie Schlagfestigkeit ankommt. Eine weitere Einsatzmöglichkeit dieser Polyurethandispersionen, welche die erfindungsgemäßen (cyclo)aliphatischen Polycarbonatdiole und/oder die erfindungsgemäße (cyclo)aliphatische Polycarbonatpolyol-Zusammensetzung enthalten, ist die Textilbeschichtung. Auch hier kommt es auf die Kombination von Hydrolyse-, Chemikalienbeständigkeit und hoher Elastizität an.

Daher ist eine wässrige Polyurethandispersion, enthaltend mindestens ein mit wenigstens einer Isocyanatgruppen aufweisenden Verbindung umgesetztes erfindungsgemäßes (cyclo)aliphatisches Polycarbonatpolyol und/oder enthaltend mindestens eine mit wenigstens einer Isocyanatgruppen aufweisenden Verbindung umgesetzte erfindungsgemäße (cyclo)aliphatische Polycarbonatpolyol-Zusammensetzung ein weiterer Gegenstand der Erfindung. Eine erfindungsgemäße wässrige Polyurethandispersion wird auf eine dem Fachmann beispielsweise aus der US 7,452,525 B1 an sich bekannte Art hergestellt, indem das erfindungsgemäße Polyol mit mindestens einer Isocyanatgruppen aufweisenden Verbindung umgesetzt wird. Dabei werden auch hydrophil wirkende Verbindungen, ggf. Kettenverlängerer und ggf. andere kurz- oder langkettige Polyole mit eingesetzt.

Ein weiterer Gegenstand der Erfindung ist ein Zwei-Komponenten-System, enthaltend eine Komponente A), umfassend mindestens ein erfindungsgemäßes (cyclo)aliphatisches Polycarbonatpolyol und/oder mindestens eine erfindungsgemäße (cyclo)aliphatische Polycarbonatpolyol-Zusammensetzung, und eine Komponente B), umfassend mindestens ein Polyisocyanat. Die erfindungsgemäßen (cyclo)aliphatischen Polycarbonatpolyole und/oder die erfindungsgemäße (cyclo)aliphatische Polycarbonatpolyol-Zusammensetzung können auch in zweikomponentigen Polyurethan-Gießharzsystemen verwendet werden. Hier spielen die Lichtbeständigkeit, Vergilbungsbeständigkeit bei hohen Temperaturen sowie Chemikalienbeständigkeit eine große Rolle.

Die erfindungsgemäßen (cyclo)aliphatischen Polycarbonatpolyole und/oder die erfindungsgemäße (cyclo)aliphatische Polycarbonatpolyol-Zusammensetzung können auch zur Herstellung von thermoplastischen Polyurethanen und Polyestern genutzt werden. Solche Kunststoffe sind besonders schlag- und abriebfest, chemikalienbeständig und je nach Zusammensetzung auch lichtbeständig. Daher ist ein thermoplastisches Polyurethan, enthaltend mindestens ein mit wenigstens einer Isocyanatgruppen aufweisenden Verbindung umgesetztes erfindungsgemäßes (cyclo)aliphatisches Polycarbonatpolyol und/oder enthaltend mindestens eine mit wenigstens einer Isocyanatgruppen aufweisenden Verbindung umgesetzte erfindungsgemäße (cyclo)aliphatische Polycarbonatpolyol-Zusammensetzung ein weiterer Gegenstand der vorliegenden Erfindung.

Ein weiterer Gegenstand der vorliegenden Erfindung sind Formkörper oder Beschichtungen, erhältlich oder erhalten aus mindestens einem erfindungsgemäßen thermoplastischen Polyurethan oder durch Aushärten mindestens einer erfindungsgemäßen wässrigen Polyurethandispersion oder durch Aushärten mindestens eines erfindungsgemäßen Zwei-Komponenten-Systems.

Als Isocyanatgruppen aufweisende Verbindungen kommen beliebige, dem Fachmann bekannte Verbindungen in Betracht. Die Erfindung wird nachfolgend anhand von Beispielen und Vergleichsbeispielen näher erläutert, ohne sie jedoch auf diese einzuschränken.

### Beispiele

Alle Prozentangaben beziehen sich, sofern nicht abweichend angegeben, auf Gewichtsprozent.

Die Bestimmung der NCO-Gehalte in % wurde über Rücktitration mit 0,1 mol/l Salzsäure nach Reaktion mit Butylamin vorgenommen, Grundlage DIN EN ISO 11909:2007.

Die OH-Zahl wurde gemäß DIN 53240-1:2013 bestimmt.

Die Viskositätsmessungen der Polycarbonatpolyole wurden bei 23°C mit einem Platte-Platte Rotationsviskosimeter, RotoVisko 1 der Firma Haake, DE, mit einer Schergeschwindigkeit von 47,94/s nach DIN EN ISO 3219:1990 durchgeführt.

Die Gehalte an Schwefel und Phosphor werden durch Elementaranalyse nach Mikrowellenaufschluss bestimmt.

Polycarbonatdiole wurden hergestellt entsprechend Beispiel 7 der WO 2018/114827 A1. Die so erhaltenen Produkte wurden alle teilneutralisiert: Auf je 1000 g des Polycarbonatdiols hergestellt entsprechend Beispiel 7 wurden bei 100°C 0,61 g 4-Dodecylbenzolsulfonsäure beigemengt und ca. eine Stunde lang gerührt.

Es zeigte sich, dass die Reaktivität der einzelnen Polycarbonatdiol-Chargen erheblich schwankte. Es wurden im Folgenden 4 Chargen Polycarbonatdiol (Chargen A, B, C und D) weiter analysiert. Dabei wurde ein Reaktivitätstest etabliert, um die Chargen in Bezug auf die Reaktivtät klassifizieren zu können.

### Testung der Reaktivität der Polycarbonatdiole

Zur Prüfung der Reaktivität der Polycarbonatdiole wurden diese 66%ig in Butylacetat gelöst und mit der doppelten Menge (hinsichtlich NCO-OH-Verhältnis) Toluylendiisocyanat (Desmodur T80, Covestro AG, Leverkusen, NCO:OH = 2,0) bei 80 °C umgesetzt. Die Umsetzung fand unter regelmäßiger Kontrolle des titrimetrisch ermittelten Isocyanatgehaltes.

Reaktivitätsmessung 1 (Charge A - Sehr Reaktive Charge):

| **Zeit nach Reaktionsbeginn [min]** | **Isocyanatgehalt [%]** |
|---|---|
| 30 | 2,1 |
| 60 | 1,7 |
| 120 | [nicht messbar, Probe geliert] |

Charge A ist zu reaktiv für die meisten Anwendungen. Trotz des hohen molaren Überschusses der Isocyanatkomponente ist der Testansatz nach 120°C geliert, was auf ein hohes Maß an Nebenreaktionen hinweist.

Reaktivitätsmessung 2 (Charge B - Reaktive Charge):

| **Zeit nach Reaktionsbeginn [min]** | **Isocyanatgehalt [%]** |
|---|---|
| 30 | 2,6 |
| 60 | 2,2 |
| 120 | 1,8 |

Charge B ist erkennbar weniger reaktiv als Charge A, jedoch immer noch zu reaktiv für manche Anwendungen.

Reaktivitätsmessung 3 (Charge C -Mäßig reaktive Charge):

| **Zeit nach Reaktionsbeginn [min]** | **Isocyanatgehalt [%]** |
|---|---|
| 30 | 3,0 |
| 60 | 2,6 |
| 120 | 2,3 |

Charge C entspricht einem typischen Bereich der gewünschten Reaktivität

In den folgenden, erfindungsgemäßen Beispielen wurde auf 1000 g des Polycarbonatdiols aus den oben aufgeführten Chargen zusätzlich unter Rühren bei 100°C jeweils 0,1 g Dibutylphosphat zugesetzt und für eine Stunde gerührt. Nach anschließendem Abkühlen wurden entsprechende Reaktivitätsmessungen durchgeführt.

Weiterhin wurde je 500 g in eine Klarglasflasche gefüllt, diese verschlossen für 17 Stunden bei 70°C in einem Umluftofen und es wurde direkt eine optische Bewertung durchgeführt. Bei keiner der Proben mit nachgesetztem Dibutylphosphat war eine Produkttrübung oder eine Verfärbung erkennbar.

Reaktivitätsmessung 4 (Charge A - Sehr reaktive Charge, mit zusätzlich 100 ppm Dibutylphosphat):

| **Zeit nach Reaktionsbeginn [min]** | **Isocyanatgehalt [%]** |
|---|---|
| 30 | 2,6 |
| 60 | 2,3 |
| 120 | 2,2 |

Reaktivitätsmessung 5 (Charge B - Reaktive Charge, mit zusätzlich 100 ppm Dibutylphosphat):

| **Zeit nach Reaktionsbeginn [min]** | **Isocyanatgehalt [%]** |
|---|---|
| 30 | 2,9 |
| 60 | 2,5 |
| 120 | 2,3 |

Reaktivitätsmessung 6 (Charge C - Mäßig reaktive Charge, mit zusätzlich 100 ppm Dibutylphosphat):

| **Zeit nach Reaktionsbeginn [min]** | **Isocyanatgehalt [%]** |
|---|---|
| 30 | 2,9 |
| 60 | 2,5 |
| 120 | 2,3 |

Bei allen drei Chargen mit zugesetztem Dibutylphosphat wurde eine gute, moderate Reaktivität gefunden. Die sehr reaktive und die reaktive Charge wurden in Bezug auf die Umsetzungsgeschwindigkeit deutlich reduziert und die Reaktion ist somit beherrschbar. Überraschenderweise wurde die Reaktionsgeschwindigkeit der mäßig reaktiven Charge - die sich bereits vor Zugabe des Dibutylphosphates in einem gut handhabbaren Bereich befand, durch die Zugabe des Dibutylphosphates kaum beeinflusst. Dies ist sehr positiv zu sehen, da somit eine Angleichung der Reaktivitäten erreichbar ist, bei verschiedenen Ausgangsniveaus und trotz identischer Menge zugesetzter weniger starker Säure.

Die Reaktivität der drei Produkte nach Zusatz des Dibutylphosphates war jeweils ungefähr vergleichbar, so dass bei Bedarf durch Katalysatorzugabe eine Beschleunigung erreicht werden kann, ohne dass die Reaktivität der einzelnen Charge überprüft und die Katalysatormenge chargenabhängig angepasst werden müsste.

Zur Prüfung der Reaktivität der Polycarbonatdiole in Bezug auf aliphatische Isocyanate wurden ein weiteres Muster des oben beschriebenen Polycarbonatdiols 67%ig in Butylacetat gelöst und mit der doppelten Menge (hinsichtlich NCO-OH-Verhältnis) Hexymethylendiisocyanat (Desmodur H, Covestro AG, Leverkusen, NCO:OH = 2,0) bei 80 °C umgesetzt. Die Umsetzung fand unter regelmäßiger Kontrolle des titrimetrisch ermittelten Isocyanatgehaltes.

Reaktivitätsmessung 7 (Charge D - Reaktive Charge):

| **Zeit nach Reaktionsbeginn [min]** | **Isocyanatgehalt [%]** |
|---|---|
| 30 | 4,4 |
| 60 | 4,1 |
| 120 | 3,5 |
| 240 | 2,7 |

In dem folgenden, erfindungsgemäßen Beispiel wurde auf 1000 g des Polycarbonatdiols aus den oben aufgeführten Chargen zusätzlich unter Rühren bei 100°C jeweils 0,01 g Phosphorsäure (85%ig in Wasser) zugesetzt und für eine Stunde gerührt. Nach anschließendem Abkühlen wurden entsprechende Reaktivitätsmessungen durchgeführt.

Reaktivitätsmessung 8 (Charge D - Reaktive Charge, nach Zusatz von 10 ppm Phosphorsäure (85%ig)):

| **Zeit nach Reaktionsbeginn [min]** | **Isocyanatgehalt [%]** |
|---|---|
| 30 | 4,5 |
| 60 | 4,4 |
| 120 | 4,2 |
| 240 | 3,6 |

Man erkennt deutlich, dass auch zugesetzte Phosphorsäure einen Reduzierung der Reaktivität bewirkt. Und dass der beschriebene Effekt auch bei - im Vergleich zu aromatischen Isocyanaten reaktionsträgeren - aliphatischen Isocyanaten zum Tragen kommt.

## Patentansprüche

1. (Cyclo)aliphatische Polycarbonatpolyol-Zusammensetzung, erhältlich oder hergestellt durch Umsetzung von mindestens einem (cyclo)aliphatischen Polyol und mindestens einem Alkylcarbonat in Anwesenheit mindestens eines basischen Katalysators und anschließende Neutralisation des Katalysators mit mindestens einer starken Säure, die einen auf das korrespondierende Säure-Basen-Paar bezogenen pKs-Wert von 1 oder geringer hat, und mindestens einer mittelstarken Säure, die einen auf das korrespondierende Säure-Basen-Paar bezogenen pKs-Wert im Bereich von > 1 bis 7 hat.

2. (Cyclo)aliphatische Polycarbonatpolyol-Zusammensetzung nach Anspruch 1, **dadurch gekennzeichnet, dass** der basische Katalysator eine Substanz mit einem, auf das korrespondierende Säure-Basen-Paar bezogenen pKb-Wert unter 7, vorzugsweise unter 2 und ganz besonders bevorzugt unter 0 ist.

3. (Cyclo)aliphatische Polycarbonatpolyol-Zusammensetzung nach Anspruch 1 oder 2, **dadurch gekennzeichnet, dass** der basische Katalysator ein basisches Salz aus der Reihe der Alkalimetalle, bevorzugt ein Natriumalkoholat oder Kaliumalkoholat ist.

4. (Cyclo)aliphatische Polycarbonatpolyol-Zusammensetzung nach einem der Ansprüche 1 bis 3, **dadurch gekennzeichnet, dass** die mindestens eine starke Säure einen, auf das korrespondierende Säure-Basen-Paar bezogenen pKs-Wert von -1 oder geringer und bevorzugt von -2 oder geringer aufweist.

5. (Cyclo)aliphatische Polycarbonatpolyol-Zusammensetzung nach einem der Ansprüche 1 bis 4, **dadurch gekennzeichnet, dass** die mindestens eine mittelstarke Säure einen, auf das korrespondierende Säure-Basen-Paar bezogenen pKs-Wert von 2 bis 5 aufweist.

6. (Cyclo)aliphatische Polycarbonatpolyol-Zusammensetzung nach einem der Ansprüche 1 bis 4, **dadurch gekennzeichnet, dass** die mindestens eine starke Säure eine organische Sulfonsäure, bevorzugt eine Alkyl- oder Arylsulfonsäure, besonders bevorzugt eine Arylsulfonsäure mit zumindest einem Alkysubstituent und ganz besonders bevorzugt eine organische Sulfonsäure ist, und/oder die mindestens eine mittelstarke Säure ein Hydrogenphosphat, bevorzugt Dibutylphosphat oder Phosphorsäure und besonders Dibutylphosphat ist.

7. Verfahren zur Herstellung einer (cyclo)aliphatischen Polycarbonatpolyol-Zusammensetzung gemäß einem der Ansprüche 1 bis 6, umfassend die Schritte
a) Umsetzung von mindestens einem (cyclo)aliphatischen Polyol und mindestens einem Alkylcarbonat in Anwesenheit mindestens eines basischen Katalysators und
b) Neutralisation durch Zugabe mindestens einer starken Säure, die einen auf das korrespondierende Säure-Basen-Paar bezogenen pKs-Wert von 1 oder geringer hat, und mindestens einer mittelstarken Säure, die einen auf das korrespondierende Säure-Basen-Paar bezogenen pKs-Wert im Bereich von > 1 bis 7 hat,
wobei Schritt b) zumindest anteilig nach Schritt a) durchgeführt wird.

8. Verfahren zur Herstellung einer (cyclo)aliphatischen Polycarbonatpolyol-Zusammensetzung nach Anspruch 7, **dadurch gekennzeichnet, dass** der basische Katalysator in einer Konzentration zwischen 1 ppm bis 10000 ppm, bevorzugt zwischen 5 ppm und 500 ppm und besonders bevorzugt zwischen 20 ppm und 150 ppm, jeweils bezogen auf das Gesamtgewicht der eingesetzten (cyclo)aliphatischen Polyole und Alkylcarbonate, anwesend ist.

9. Verfahren zur Herstellung einer (cyclo)aliphatischen Polycarbonatpolyol-Zusammensetzung nach Anspruch 7, **dadurch gekennzeichnet, dass** die Neutralisation des basischen Katalysators zu 70 bis 110%, bevorzugt zu 90 bis 100%, besonders bevorzugt zu 95 bis 99% durch die starke Säure, sowie zu 1 bis 50%, bevorzugt zu 2 bis 30%, besonders bevorzugt zu 3 bis 20% durch die mittelstarke Säure, jeweils molar gesehen, bezogen auf die molare Menge an Base, bei mehrbasigen Säuren wird hier nur die Gruppe mit dem niedrigsten pKs gezählt, erfolgt.

10. (Cyclo)aliphatische Polycarbonatpolyol-Zusammensetzung, enthaltend mindestens ein (cyclo)aliphatisches Polycarbonatpolyol, 10 bis 200 Gew.-ppm Schwefel, bezogen auf das Gesamtgewicht der (cyclo)aliphatische Polycarbonatpolyol-Zusammensetzung, und 0,1 bis 10 Gew.-ppm Phosphor, bezogen auf das Gesamtgewicht der (cyclo)aliphatischen Polycarbonatpolyol-Zusammensetzung, wobei Schwefel und Phosphor chemisch gebunden sind.

11. Verwendung mindestens einer starken Säure, die einen auf das korrespondierende Säure-Basen-Paar bezogenen pKs-Wert von 1 oder geringer hat, und mindestens einer mittelstarken Säure, die einen auf das korrespondierende Säure-Basen-Paar bezogenen pKs-Wert im Bereich von > 1 bis 7 hat, von mindestens einer organischen Sulfonsäure mit einem Molekulargewicht von 250 bis 1000 g/mol und mindestens einer verzweigten oder unverzweigten Alkylsubstitution mit mindestens vier Kohlenstoffatomen als Stopper bei der Herstellung von (cyclo)aliphatischen Polycarbonatpolyol-Herstellung Zusammensetzungen zur Senkung der Reaktivität und/oder Erhöhung der Trübungsstabilität von Polycarbonatpolyolen.

12. Wässrige Polyurethandispersion, enthaltend mindestens eine mit wenigstens einer Isocyanatgruppen aufweisenden Verbindung umgesetzte (cyclo)aliphatische Polycarbonatpolyol-Zusammensetzung gemäß einem der Ansprüche 1 bis 6 oder gemäß Anspruch 10.

13. Zwei-Komponenten-System, enthaltend eine Komponente A), umfassend mindestens eine erfindungsgemäße (cyclo)aliphatische Polycarbonatpolyol-Zusammensetzung gemäß einem der Ansprüche 1 bis 6 oder gemäß Anspruch 10, und eine Komponente B), umfassend mindestens ein Polyisocyanat.

14. Thermoplastisches Polyurethan, enthaltend mindestens eine mit wenigstens einer Isocyanatgruppen aufweisenden Verbindung umgesetzte erfindungsgemäße (cyclo)aliphatische Polycarbonatpolyol-Zusammensetzung gemäß einem der Ansprüche 1 bis 6 oder gemäß Anspruch 10.

15. Formkörper oder Beschichtung, erhältlich oder erhalten aus mindestens einem thermoplastischen Polyurethan nach Anspruch 14 oder durch Aushärten mindestens einer wässrigen Polyurethandispersion nach Anspruch 12 oder durch Aushärten mindestens eines Zwei-Komponenten-Systems nach Anspruch 13.
